# FASCICULE DE BREVET EUROPEEN

(11) **EP 0 958 547 B1**
(45) Date de publication et mention de la délivrance du brevet: **25.09.2002**
(21) Numéro de dépôt: 97948985.3
(22) Date de dépôt: 03.12.1997
(51) Int. Cl.: G06K 9/20

(54) **SYSTEME DE RECONNAISSANCE DE CARACTERES MANUSCRITS**
ANLAGE ZUR ERKENNUNG HANDGESCHRIEBENER ZEICHEN
SYSTEM FOR RECOGNITION OF HAND-WRITTEN CHARACTERS

(30) Priorité: 06.12.1996 FR 9615243
(43) Date de publication de la demande: 24.11.1999
(73) Titulaire: Itesoft S.A., 30470 Aimargues (FR)
(72) Inventeur: CHARPENTIER, Didier, F-30220 Aigues-Mortes (FR)
(86) Numéro de dépôt international: FR9702184
(87) Numéro de publication internationale: WO98025230

(56) Documents cités:
- EP-A- 0 375 090
- EP-A- 0 463 471
- EP-A- 0 504 576
- US-A- 4 817 179
- HAMBURGEN A: "FILTERABLE PREPRINTED GUIDELINES FOR OPTICAL CHARACTER RECOGNITION" IBM TECHNICAL DISCLOSURE BULLETIN, vol. 15, no. 10, 1 mars 1973, page 3115/3116 XP000570744

## Description

### Domaine technique :

La présente invention concerne la reconnaissance de caractères écrits à la main, et en particulier un procédé et un système de reconnaissance de caractères manuscrits sur des documents de type formulaire à remplir.

### Etat de la technique :

Les technologies modernes liées à l'informatique permettent de nos jours la lecture automatique de documents manuscrits dans des conditions où le coût de revient est très inférieur au coût d'une saisie manuelle.

Toutefois le traitement automatique de documents manuscrits n'est possible avec une grande efficacité que si on utilise des documents de type formulaire qui ont été préalablement imprimés en pré-casant les zones utiles qui devront être lues.

Le pré-casage oblige un utilisateur, ou scripteur, qui remplit un document du type formulaire à bien positionner ses caractères et à écrire lisiblement un caractère dans chaque case. Dans chacune des cases, le scripteur est invité à écrire une lettre (généralement en lettre majuscule), un chiffre ou une croix.

Le document manuscrit est ensuite lu par un capteur électro-optique qui délivre généralement un signal pouvant prendre deux niveaux, un premier niveau correspondant à la teinte des caractères manuscrits, et un deuxième niveau correspondant à la couleur du papier dans les cases. Un moyen de traitement d'images effectue ensuite une reconnaissance des caractères manuscrits se trouvant dans les cases et fait correspondre à chaque case une suite d'informations binaires selon des techniques connues.

Lors du traitement, il est évidemment nécessaire de séparer ou d'éliminer le pré-casage préalablement imprimé sur le document. Plusieurs procédés ont été employés pour effectuer cette élimination, et notamment l'utilisation d'un pré-casage inactinique. Ce procédé présente toutefois des inconvénients, et en particulier la nécessité d'imprimer le formulaire en au mois deux couleurs.

Un autre procédé ne présentant pas ces inconvénients est décrit dans la demande de brevet français FR-A1-2 737 930. Le procédé décrit dans cette demande de brevet consiste à utiliser un formulaire contenant des cases imprimées pour y écrire des caractères manuscrits destinés à être lus par un dispositif de reconnaissance optique, les cases étant prédéfinies par des motifs prédéterminés constitués d'éléments caractérisés par au moins un paramètre vérifiant une relation prédéterminée de manière à pouvoir éliminer facilement, lors de la lecture du document, les objets dont le ou les paramètres vérifiant la relation prédéterminée comme étant des éléments constituants les motifs prédéterminés.

Bien qu'efficace, ce procédé exige cependant que le formulaire comporte en face ou sous les cases à remplir la nature des informations à écrire dans lesdites cases, telles que "NOM", PRENOM", "ADRESSE", etc.. Cette impression indispensable pour que les informations correctes soient écrites par le scripteur dans les bonnes cases, a évidemment l'inconvénient majeur d'occuper une surface non négligeable du formulaire et donc de gaspiller du papier.

### Exposé de l'invention :

C'est pourquoi le but principal de l'invention est de fournir un système de reconnaissance de caractères manuscrits utilisant un formulaire dans lequel aucune surface n'est utilisée pour inscrire des informations relatives aux cases à remplir.

L'invention est définie dans les revendications 1, 12 et 15 ci-jointes.

### Description brève des figures :

Les buts, objets et caractéristiques de l'invention ressortiront mieux à la lecture de la description qui suit faite en référence aux dessins dans lesquels :
la figure 1 représente une portion d'un formulaire utilisé dans la technique antérieure,
la figure 2 représente une portion d'un formulaire mettant en oeuvre les principes de l'invention, et
la figure 3 représente schématiquement un dispositif de reconnaissance de caractères utilisés pour la lecture du formulaire selon l'invention.

### Description détaillée de l'invention :

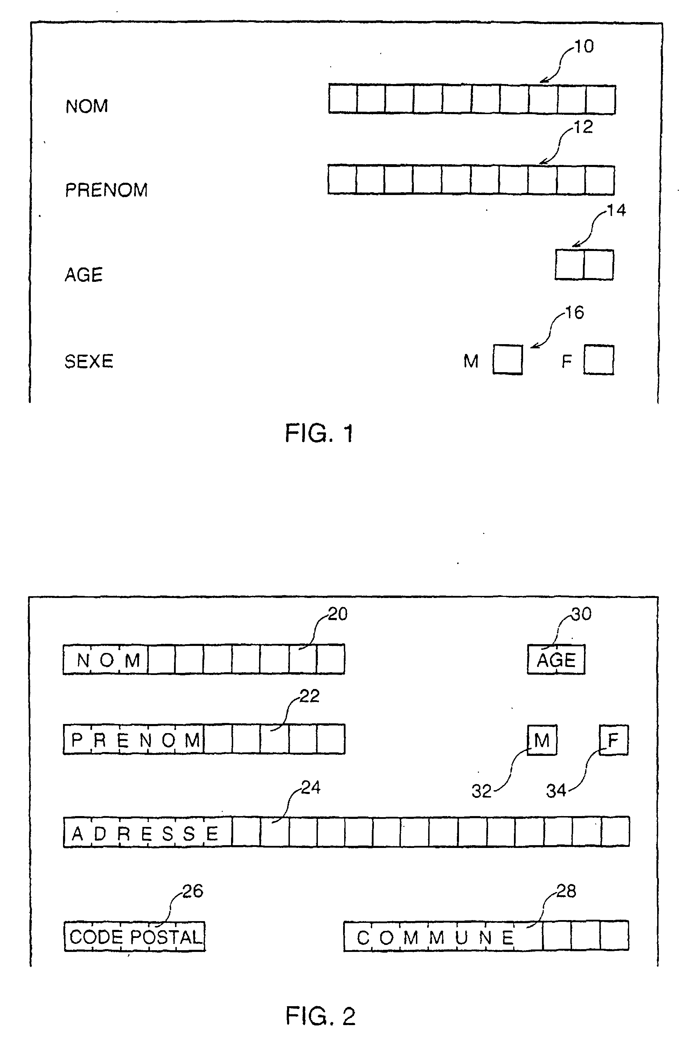

Un formulaire classique se présente généralement comme illustré sur la figure 1. Le scripteur doit remplir des cases en suivant les indications imprimées pour chaque groupe de cases. Ainsi il doit inscrire son nom dans les cases de la première ligne 10, généralement en lettres majuscules, puis son prénom dans les cases de la deuxième ligne 12. Dans la troisième ligne 14, il doit indiquer son âge en inscrivant deux chiffres. Dans certaines lignes comme la ligne 16 indiquée "SEXE", il doit mettre une croix dans une case, soit celle indiquée "M" (pour masculin), soit celle indiquée "F" (pour féminin).

Comme on le constate, il faut prévoir dans le formulaire des zones contiguës aux cases (comme sur la figure 1) ou sous les cases, pour indiquer les informations à écrire dans les cases telles que le nom, le prénom, l'âge, le sexe,etc..

L'invention évite d'occuper une surface du formulaire pour y inscrire les indications mentionnées ci-dessus en se servant tout d'abord du procédé faisant l'objet de la demande de brevet FR-A1-2 737 930. En d'autres termes, les cases 10, 12, 14 ou 16 sont constituées d'éléments qui sont caractérisés par un ou plusieurs paramètres vérifiant une relation prédéterminée, tels les dimensions des éléments, leur surface, leur position, l'écartement entre deux éléments ou encore des paramètres caractérisant la forme des éléments.

Au moment de la lecture par le dispositif de reconnaissance de caractères, le traitement effectué consiste à éliminer les éléments du motif de chaque case lorsqu'il y a détection des paramètres vérifiant ladite relation prédéterminée, pour en reconnaître le caractère qui s'y trouve.

En utilisant ce concept, l'invention consiste à inscrire les indications propres à aider le scripteur directement dans les cases et non pas en face ou dessous les cases comme c'était le cas auparavant, et en utilisant les mêmes, principes que ceux décrits dans la demande de brevet FR-A1-2 737 930. Les indications telles que celles illustrées sur la figure 2, occupent une partie des rangées de cases dans lesquelles le scripteur écrira les informations demandées. Ainsi, "NOM" est écrit dans la rangée de cases 20 destinées à écrire le nom, "PRENOM" est écrit dans la rangée 22, "ADRESSE" est écrit dans la rangée 24, "CODE POSTAL" est écrit dans la rangée 26, "COMMUNE" est écrit dans la rangée 28 et "AGE" est écrit dans les deux cases 30 destinées à l'inscription de l'âge du scripteur. L'une des deux cases 32 et 34 pour le sexe et comportant respectivement un "M" (masculin) et un "F" (féminin) doit être remplie d'une croix.

Les indications inscrites à l'intérieur des cases sont destinées, comme les cases elles-mêmes, à être éliminées lors de la lecture par le dispositif de reconnaissance de caractères.

Un mode de réalisation consiste à ce que les cases et/ou les caractères pré-inscrits soient formés d'éléments caractérisés par un ou plusieurs paramètres vérifiant une relation prédéterminée qui est reconnue au moment de la lecture du formulaire.

De manière à ce que les caractères écrits par le scripteur ressortent bien malgré l'existence des caractères pré-inscrits, il est judicieux que ces derniers soient d'une teinte suffisamment claire de manière à ce qu'ils apparaissent très peu lorsque les cases sont remplies par le scripteur tout en étant lisibles avant l'inscription. On peut par exemple imprimer les cases du formulaire et les caractères qui sont pré-inscrits dans une teinte bleu clair et demander à ce que le remplissage par le scripteur soit effectué avec un stylo à encre noire.

On doit noter qu'un mode de réalisation entrant dans le cadre de l'invention tel qu'il vient d'être exposé, est de prévoir que les caractères pré-inscrits figurant dans les cases et/ou les cases elles-mêmes, soient imprimés à l'aide d'une encre inactinique et donc éliminés d'emblée à la lecture par le dispositif de reconnaissance de caractères.

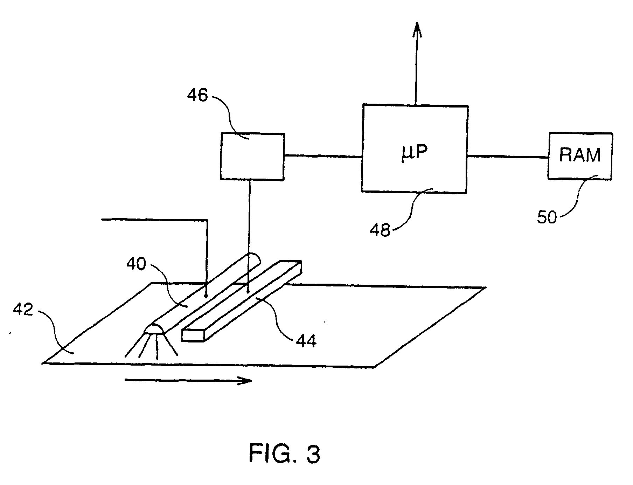

Un dispositif de reconnaissance optique utilisé dans le cadre de l'invention est représenté sur la figure 3. Le dispositif dispose d'une source lumineuse 40 fournissant au document 42 un éclairement déterminé. Adjacent à la source lumineuse 40, est placé un capteur électro-optique 44 chargé de recueillir l'éclairement réfléchi par le document au fur et à mesure qu'il avance dans le sens de la flèche. Les signaux fournis par le capteur 44 sont ensuite convertis en signaux numériques par le convertisseur analogique-numérique 46. Les signaux numériques résultants sont fournis à un processeur (ou micro-processeur) 48 de façon à éliminer les motifs de positionnement, ou pour les emmagasiner dans une mémoire 50.

Lorsque le traitement d'élimination est effectué par le capteur électro-optique 44, ce dernier peut agir de façon analogique (c'est à dire à la manière d'un photocopieur). Dans ce cas, les motifs à utiliser pour le précasage du formulaire et des caractères pré-inscrits à l'intérieur des cases devront être composés d'éléments dont une dimension est inférieure au seuil de résolution du capteur. A la sortie du capteur, les éléments du motif n'ayant pas été lus par le capteur du fait de sa faible résolution, auront disparu et les signaux fournis ne représenteront que les seuls caractères manuscrits dont la largeur est généralement bien au-dessus du seuil de résolution du capteur.

Les signaux peuvent ensuite être convertis en signaux numériques pour traitement ultérieur et reconnaissance des caractères.

Le traitement d'élimination peut avoir lieu directement par le capteur électronique du dispositif de reconnaissance de caractères lorsque le capteur a une faible résolution, ou postérieurement à la capture de l'image, au moyen d'un traitement numérique lorsque le capteur a une forte résolution.

Ainsi, on peut mettre en oeuvre un logiciel simple lorsque les motifs des cases et les caractères pré-inscrits dans les case sont constitués d'éléments simples par exemple des lignes fines verticales ou obliques.

Le traitement à posteriori, effectué par le processeur 48 du dispositif de reconnaissance fait alors appel à un logiciel pour lequel les suites de bits où le premier et le quatrième bits sont 0, en particulier les suites 0110 correspondant aux éléments du motif, sont remplacées par des suites de bits 0. Les éléments du motif imprimé et des caractères pré-inscrits dans les cases seront donc éliminés. A l'inverse, les suites comportant au moins trois bits 1 consécutifs du type 01110 correspondant à l'image d'un trait de caractère manuscrit ne seront pas éliminées. Un tel traitement permettant d'éliminer les motifs dont les éléments sont caractérisés par leur forme, fait appel à une matrice comme expliqué dans la demande de brevet FR-A1-2 737 930.

'On doit noter que, bien que dans l'exemple ci-dessus la matrice de référence ne prend en compte qu'un élément, on peut imaginer d'utiliser une matrice de référence prenant en compte deux ou plusieurs éléments constituant les motifs et les caractères pré-inscrits sans sortir du cadre de l'invention.

## Revendications

1. Document contenant des zones pour inscrire au moins un caractère par zone, et des indications pour inscrire des caractères dans lesdites zones, ledit document étant **caractérisé en ce qu'**il comporte des indications disposées dans lesdites zones pour que des caractères à inscrire se superposent à des indications.

2. Document selon la revendication 1, **caractérisé en ce que** des zones sont constituées de cases imprimées.

3. Document selon la revendication 2, **caractérisé en ce que** lesdites cases imprimées sont imprimées avec une encre inactinique.

4. Document selon l'une des revendications 1 à 3, **caractérisé en ce que** lesdites indications sont imprimées avec une encre inactinique.

5. Document selon l'une quelconque des revendications 1 à 4, **caractérisé en ce que** lesdites indications sont formées de caractères alphanumériques.

6. Document selon l'une quelconque des revendications 1 à 5, **caractérisé en ce que** des indications sont disposées, verticalement, au centre des zones qui les contiennent.

7. Document selon l'une quelconque des revendications 1 à 6, **caractérisé en ce que** des indications possèdent une hauteur valant la moitié de la hauteur des zones qui les contiennent.

8. Document selon l'une quelconque des revendications 1 à 7, **caractérisé en ce que** des zones qui contiennent des indications sont constituées de cases partiellement ouvertes.

9. Document de type formulaire, selon l'une quelconque des revendications 1 à 8, contenant des cases imprimées (20, 22, 24, 26, 28, 30, 32, 34) pour y écrire des caractères manuscrits destinés à être lus par un dispositif de reconnaissance optique ; ledit document étant **caractérisé en ce que** lesdites cases contiennent des caractères pré-inscrits fournissant des indications à l'utilisateur pour écrire les caractères manuscrits dans lesdites cases, et **en ce que** au moins lesdits caractères pré-inscrits sont constitués d'éléments **caractérisés par** au moins un paramètre d'élimination permettant de les éliminer facilement lors de la lecture du document par un dispositif de reconnaissance optique.

10. Document selon la revendication 9, dans lequel lesdits caractères pré-inscrits sont constitués d'éléments **caractérisés par** au moins un paramètre vérifiant une relation prédéterminée alors que ladite relation prédéterminée n'est pas vérifiée pour les caractères manuscrits, de manière à pouvoir éliminer facilement, lors de la lecture du document par un dispositif de reconnaissance optique, les objets dont le ou les paramètres vérifient ladite relation prédéterminée comme étant des éléments à éliminer.

11. Document selon la revendication 10, dans lequel lesdites cases sont également constituées d'éléments **caractérisés par** au moins un paramètre vérifiant une relation prédéterminée alors que ladite relation prédéterminée n'est pas vérifiée pour les caractères manuscrits, de manière à pouvoir éliminer facilement, lors de la lecture du document par un dispositif de reconnaissance optique, les objets dont le ou les paramètres vérifient ladite relation prédéterminée comme étant des éléments à éliminer.

12. Procédé de reconnaissance de caractères inscrits dans des zones d'un document, **caractérisé en ce qu'**il comporte une étape de lecture de caractères inscrits superposés à des indications disposées dans lesdites zones et servant à inscrire lesdits caractères dans lesdites zones.

13. Procédé selon la revendication 12 contenant des cases imprimées (20, 22, 24, 26, 28, 30, 32, 34) ainsi que des caractères pré-inscrits à l'intérieur desdites cases imprimées pour y écrire des caractères manuscrits correspondants aux indications fournies par lesdits caractères pré-inscrits, ledit procédé étant **caractérisé par** les étapes suivantes :
- lecture du document par zones élémentaires successives à l'aide d'un dispositif de reconnaissance de caractères (44, 46, 48),
- détection d'un ou plusieurs paramètres d'élimination caractérisant un objet lu dans un ensemble de zones élémentaires, et
- élimination des objets constitués d'éléments **caractérisés par** lesdits paramètres d'élimination.

14. Procédé selon la revendication 13, dans lequel lesdits éléments prédéterminés ont une forme prédéterminée et l'étape de détermination consiste à comparer l'éclairement réfléchi par un ensemble de zones élémentaires du document pouvant contenir entièrement un ou plusieurs desdits éléments à une matrice de référence dont les éléments correspondent respectivement aux zones élémentaires dudit ensemble, de manière à éliminer, lors de l'étape d'élimination, les objets entièrement contenus dans tout un ensemble dont la comparaison avec ladite matrice donne un résultat donné comme étant des éléments desdits motifs prédéterminés, et à ne conserver que les objets pour lesquels la comparaison avec ladite matrice donne un résultat opposé comme étant des portions de caractères manuscrits.

15. Dispositif de reconnaissance de caractères inscrits dans des zones d'un document, **caractérisé en ce qu'**il comporte un capteur adapté à capter une grandeur physique représentative de caractères inscrits superposés à des indications disposées dans lesdites zones et servant à inscrire lesdits caractères dans lesdites zones.

## Patentansprüche

1. Dokument mit Feldern zum Eintragen mindestens eines Zeichens pro Feld und Hinweisen zum Eintragen von Zeichen in die genannten Felder,
• **dadurch gekennzeichnet,**
• **dass** das Dokument Hinweise enthält, die so in den genannten Feldern angeordnet sind, dass sich einzutragende Zeichen den Hinweisen überlagern.

2. Dokument nach Anspruch 1,
• **dadurch gekennzeichnet,**
• **dass** Felder von aufgedruckten Kästchen gebildet werden.

3. Dokument nach Anspruch 2,
• **dadurch gekennzeichnet,**
• **dass** die genannten aufgedruckten Kästchen mit einer Blindfarbe gedruckt sind.

4. Dokument nach einem der Ansprüche 1 bis 3,
• **dadurch gekennzeichnet,**
• **dass** die genannten Hinweise mit einer Blindfarbe gedruckt sind.

5. Dokument nach einem der Ansprüche 1 bis 4,
• **dadurch gekennzeichnet,**
• **dass** die genannten Hinweise aus alphanumerischen Zeichen bestehen.

6. Dokument nach einem der Ansprüche 1 bis 5,
• **dadurch gekennzeichnet,**
• **dass** Hinweise senkrecht in der Mitte der sie enthaltenden Felder angeordnet sind.

7. Dokument nach einem der Ansprüche 1 bis 6,
• **dadurch gekennzeichnet,**
• **dass** Hinweise eine Höhe haben, die der Hälfte der Höhe der sie enthaltenden Felder entspricht.

8. Dokument nach einem der Ansprüche 1 bis 7,
• **dadurch gekennzeichnet,**
• **dass** Felder, die Hinweise enthalten, von teilweise offenen Kästchen gebildet werden.

9. Dokument in der Art eines Formulars nach einem der Ansprüche 1 bis 8 mit aufgedruckten Kästchen (20, 22, 24, 26, 28, 30, 32, 34) zum Eintragen handgeschriebener Zeichen, die mit einem optischen Zeichenerkennungssystem gelesen werden sollen,
• **dadurch gekennzeichnet,**
• **dass** die genannten Kästchen vorgedruckte Zeichen enthalten, die dem Benutzer Hinweise zum Eintragen der handgeschriebenen Zeichen in die genannten Kästchen geben, und
• **dass** zumindest die genannten vorgedruckten Zeichen aus Elementen bestehen, die durch mindestens einen Eliminationsparameter gekennzeichnet sind, so dass sie beim Lesen des Dokumentes mit einem optischen Zeichenerkennungssystem leicht eliminiert werden können.

10. Dokument nach Anspruch 9,
• **dadurch gekennzeichnet,**
• **dass** die genannten vorgedruckten Zeichen aus Elementen bestehen, die durch mindestens einen Parameter gekennzeichnet sind, der eine vorher festgelegte Beziehung erfüllt, während die genannte vorher festgelegte Beziehung von den handgeschriebenen Zeichen nicht erfüllt wird, so dass beim Lesen des Dokumentes mit einem optischen Zeichenerkennungssystem die Objekte, bei denen die genannte vorher festgelegte Beziehung durch den oder die Parameter erfüllt wird, leicht als zu eliminierende Elemente eliminiert werden können.

11. Dokument nach Anspruch 10,
• **dadurch gekennzeichnet,**
• **dass** die genannten Kästchen ebenfalls aus Elementen bestehen, die durch mindestens einen Parameter gekennzeichnet sind, der eine vorher festgelegte Beziehung erfüllt, während die genannte vorher festgelegte Beziehung von den handgeschriebenen Zeichen nicht erfüllt wird, so dass beim Lesen des Dokumentes mit einem optischen Zeichenerkennungssystem die Objekte, bei denen die genannte vorher festgelegte Beziehung durch den oder die Parameter erfüllt wird, leicht als zu eliminierende Elemente eliminiert werden können.

12. Zeichenerkennungsverfahren für in Felder eines Dokumentes eingetragene Zeichen,
• **dadurch gekennzeichnet,**
• **dass** das Verfahren eine Lesephase enthält, in der Zeichen gelesen werden, die so eingetragen worden sind, dass sie sich in den genannten Feldern angeordneten Hinweisen zum Eintragen der genannten Zeichen in die genannten Felder überlagern.

13. Zeichenerkennungsverfahren nach Anspruch 12 für Dokumente mit aufgedruckten Kästchen (20, 22, 24, 26, 28, 30, 32, 34) sowie vorgedruckten Zeichen in den genannten aufgedruckten Kästchen zum Eintragen handgeschriebener Zeichen nach den Hinweisen, die die genannten vorgedruckten Zeichen geben,
• **dadurch gekennzeichnet,**
• **dass** das Verfahren die folgenden Phasen umfasst:
- Lesen der aufeinander folgenden Elementarfelder des Dokuments mit einem Zeichenerkennungssystem (44, 46, 48),
- Suchen eines oder mehrerer Eliminationsparameter in einem Objekt, das in einer Gruppe von Elementarfeldern gelesen wurde, und
- Eliminieren der Objekte, deren Elemente durch die genannten Eliminationsparameter gekennzeichnet sind.

14. Zeichenerkennungsverfahren nach Anspruch 13,
• **dadurch gekennzeichnet,**
• **dass** die genannten vorher festgelegten Elemente eine vorher festgelegte Form haben und
• **dass** die Suchphase darin besteht, die Lichtmenge, die von einer Gruppe von Elementarfeldern des Dokumentes, die eines oder mehrere der genannten Elemente vollständig enthalten können, reflektiert wird, mit einer Referenzmatrix zu vergleichen, deren Elemente jeweils den Elementarfeldern der genannten Gruppe entsprechen, so dass in der Eliminationsphase die vollständig in einer ganzen Gruppe enthaltenen Objekte, für die der Vergleich mit der genannten Referenzmatrix ein bestimmtes Resultat ergibt, eliminiert werden und nur die Objekte, für die der Vergleich mit der genannten Referenzmatrix ein gegenteiliges Resultat ergibt, als Teile handgeschriebener Zeichen erhalten bleiben.

15. Zeichenerkennungssystem für in Felder eines Dokumentes eingetragene Zeichen,
• **dadurch gekennzeichnet,**
• **dass** das System einen Sensor enthält, der geeignet ist, eine physikalische Größe als Repräsentation für Zeichen aufzunehmen, die so eingetragen worden sind, dass sie sich in den genannten Feldern angeordneten Hinweisen zum Eintragen der genannten Zeichen in die genannten Felder überlagern.

## Claims

1. A document containing zones in which to write at least one character per zone, and indications as to write characters in said zones, said document being **characterized in that** it includes indications located in said zones such that the characters to be inscribed will be written over said indications.

2. Document according to claim 1, **characterized in that** the zones are constituted by printed boxes.

3. Document according to claim 2, **characterized in that** said printed boxes are printed with a non-actinic ink.

4. Document according to either of claims 1 to 3, **characterized in that** said indications are printed with a non-actinic ink.

5. Document according to either of claims 1 to 4, **characterized in that** said indications are formed of alphanumeric characters.

6. Document according to either of claims 1 to 5, **characterized in that** indications are arranged vertically at the center of the zones containing them.

7. Document according to either of claims 1 to 6, **characterized in that** indications have a height equal to half the height of the zones containing them.

8. Document according to either of claims 1 to 7, **characterized in that** zones containing indications are constituted by partially open boxes.

9. Document of the form type, according to either of claims 1 to 8, containing printed boxes (20, 22, 24, 26, 28, 30, 32, 34) to receive hand-written characters as to be read by an optical recognition device; said document being **characterized in that** said boxes contain pre-inscribed characters supplying indications to the user to write hand-written characters into said boxes, and **in that** at least said pre-inscribed characters are constituted by elements **characterized by** at least one elimination parameter permitting easy elimination of them during the reading of the document by an optical recognition device.

10. Document according to claim 9, in which said pre-inscribed characters are constituted by elements **characterized by** at least one parameter verifying a predetermined relation whereas said predetermined relation is not verified for hand-written characters, in such a way that is easy, during reading of the document by an optical recognition device, to eliminate the objects whose parameter or parameters verify said predetermined relation as being elements to be eliminated.

11. Document according to claim 10, in which said boxes are also constituted of elements **characterized by** at least one parameter verifying a predetermined relation whereas said predetermined relation is not verified for hand-written characters, in such a way that it is easy, during reading of the document by an optical recognition device, to eliminate the objects whose parameter or parameters verify said predetermined relation as being elements to be eliminated.

12. Process for recognition of characters inscribed in zones of a document, **characterized in that** it comprises a step of reading inscribed characters written over indications located in said zones and used for writing said characters in said zones.

13. Process according to claim 12 containing printed boxes (20, 22, 24, 26, 28, 30, 32, 34) as well as characters pre-inscribed inside said printed boxes for writing hand-written characters corresponding to the indications supplied by said pre-inscribed characters, said process being **characterized by** the following steps:
- reading of the document by successive elementary zones using a character recognition device (44, 46, 48),
- detection of one or more elimination parameters characterizing an object read in a set of elementary zones, and
- elimination of the objects constituted by elements **characterized by** said elimination parameters.

14. Process according to claim 13, in which said predetermined elements have a predetermined shape and the determination step consists in comparing the light reflected by a set of elementary zones of the document which may entirely contain one or more said elements with a reference matrix whose elements correspond respectively to the elementary zones of said set, so as to eliminate, during the elimination step, the objects entirely contained in any set whose comparison with said matrix gives a result given as being elements of said predetermined patterns, and saving only the objects for which the comparison with said matrix gives an opposite result as being portions of hand-written characters.

15. Device for recognition of characters inscribed in zones of a document, **characterized in that** it comprises a sensor adapted for detecting a physical dimension representative of inscribed characters written over indications located in said zones and used for writing said characters in said zones.
